# EUROPEAN PATENT SPECIFICATION

(11) **EP 3 956 967 B1**
(45) Date of publication and mention of the grant of the patent: **04.11.2026**
(21) Application number: 20724997.0
(22) Date of filing: 17.04.2020
(51) Int. Cl.: A01D 34/00, G05D 1/00, B60L 58/12, B60L 58/14, H02J 7/82, H02J 7/00

(54) **AUTONOMOUS MACHINE NAVIGATION AND CHARGING**
AUTONOME MASCHINENNAVIGATION UND -AUFLADUNG
NAVIGATION ET CHARGE DE MACHINE AUTONOME

(30) Priority: 17.04.2019 US 201962835241 P; 03.07.2019 US 201962870439 P
(43) Date of publication of application: 23.02.2022
(73) Proprietor: The Toro Company, Bloomington, MN 55420-1196 (US)
(72) Inventor: KRAFT, Jason Thomas, Bloomington, MN 55420-1196 (US); STROUD, Adam Burghardt, Bloomington, MN 55420-1196 (US)
(74) Representative: J A Kemp LLP
(86) International application number: PCT/US2020/028710
(87) International publication number: WO 2020/214925

(56) References cited:
- US-A1- 2015 333 540
- US-A1- 2016 165 795

## Description

The invention relates to autonomous machines and, more particularly, to autonomous working machines such as robotic lawn mowers. The invention also relates to a corresponding method.

Existing autonomous machines utilize boundary wires to find their base station for charging, which may waste energy and battery life. For example, some autonomous machines randomly search for the boundary wire, then randomly select a direction to follow the boundary wire.

US 2016/165795 A1 discloses a method of mapping an area to be mowed with an autonomous mowing robot.

US 2015/333540 A1 discloses a wireless power supply system.

### SUMMARY

The techniques of this disclosure generally relate to accurately predicting the battery energy needed, and identifying an efficient path, for an autonomous machine to return to a base station or any other destination. Such techniques may facilitate more efficient mowing of the work region with less downtime for charging.

According to the present invention, there is provided an autonomous machine, as defined in claim 1.

The invention also provides a method for autonomous machine navigation, as defined in claim 4.

The summary is not intended to describe each embodiment or every implementation of the present disclosure. A more complete understanding will become apparent and appreciated by reference to the following detailed description and claims taken in view of the accompanying figures of the drawing.

### BRIEF DESCRIPTION OF THE DRAWINGS

Exemplary embodiments will be further described with reference to the drawings, wherein:
**FIG. 1A** is a diagrammatic side elevation view of an autonomous working machine (e.g., ground working machine such as a robotic lawn mower) incorporating a vision system in accordance with the present disclosure;
**FIG. 1B** is a diagram of one example of a method for use with the machine shown in **FIG. 1A** in accordance with the present disclosure;
**FIG. 2** is a flow diagram of one example of a navigation method for use with the machine shown in FIGS. 1A**-B** in accordance with the present disclosure;
**FIG. 3** is a flow diagram of one example of a method of determining travel energy for use with the method shown in **FIG. 2** in accordance with the present disclosure;
**FIG. 4** is a plot of energy consumed per unit distance versus speed, which may be used to determine the travel energy shown in **FIG. 3****;**
**FIGS. 5A** and **5B** are plots of a work region in (A) an overhead view and (B) a perspective view in accordance with the present disclosure, which may be used with the method shown in **FIG. 2****;**
**FIG. 6** is a diagram of one example of a battery management system of the navigation system shown in **FIG. 1B****;**
**FIG. 7** is a diagram of one example of a battery cell configuration for the battery shown in **FIG. 6****;**
**FIG. 8** is a flow diagram of one example of a method for use with the battery management system shown in **FIG. 6****;**
**FIG. 9** is a flow diagram of one example of a method for determining battery energy in the method shown in **FIG. 8****;**
**FIG. 10** is a flow diagram of one example of a method for determining battery capacity in the method shown in **FIG. 9****;** and
**FIG. 11** is a flow diagram of one example of a method for determining open circuit battery voltage in the method shown in **FIG. 9****.**

The figures are rendered primarily for clarity and, as a result, are not necessarily drawn to scale. Moreover, various structure/components, including but not limited to fasteners, electrical components (wiring, cables, etc.), and the like, may be shown diagrammatically or removed from some or all of the views to better illustrate aspects of the depicted embodiments, or where inclusion of such structure/components is not necessary to an understanding of the various illustrative embodiments described herein. The lack of illustration/description of such structure/components in a particular figure is, however, not to be interpreted as limiting the scope of the various embodiments in any way.

### DETAILED DESCRIPTION

In the following detailed description of illustrative embodiments, reference is made to the accompanying figures of the drawing which form a part hereof. It is to be understood that other embodiments, which may not be described and/or illustrated herein, are certainly contemplated.

All headings provided herein are for the convenience of the reader and should not be used to limit the meaning of any text that follows the heading, unless so specified. Moreover, unless otherwise indicated, all numbers expressing quantities, and all terms expressing direction/orientation (e.g., vertical, horizontal, parallel, perpendicular, etc.) in the specification and claims are to be understood as being modified in all instances by the term "about." The term "and/or" (if used) means one or all of the listed elements or a combination of any two or more of the listed elements. "I.e." is used as an abbreviation for the Latin phrase *id est and means "that is. " "E.g.,* " *is used as an abbreviation for* the Latin phrase *exempli gratia and means "for example.* " The term "or" is generally employed in its inclusive sense, for example, to mean "and/or" unless the context clearly dictates otherwise.

Embodiments of the present disclosure provide autonomous machines, methods, and systems to facilitate autonomous functioning of the machine within a work region. While different machines are certainly contemplated within the scope of this disclosure, an exemplary machine is described and illustrated herein as an autonomous lawn mower.

In some embodiments, the autonomous mower may learn and subsequently recognize a boundary of the work region using an onboard machine vision system and, optionally, other non-vision-based sensors. The vision system may utilize one or more cameras that together form part of a navigation system as described more fully in U.S. Provisional Patent Application No. 62/818,893, entitled AUTONOMOUS MACHINE NAVIGATION USING VISION SYSTEM, filed 15 March 2019.

Also, in some embodiments, the autonomous mower may generate a terrain map of the work region using various onboard sensors. The mower may utilize any suitable technique, for example, as described in U.S. Provisional Patent Application No. 62/801,267, entitled AUTONOMOUS GROUNDS MAINTENANCE MACHINES WITH PATH PLANNING FOR TRAP AND OBSTACLE AVOIDANCE, filed 5 February 2019.

Techniques of the present disclosure may allow the autonomous mower to more accurately predict the battery energy needed, and identify an efficient path, to return to a base station or any other destination. Such techniques may facilitate more efficient mowing of the work region with less downtime for charging.

The present disclosure provides autonomous machines that provide an intelligent navigation to return to a base station, or charging station, which may be implemented in a controller or be part of an overall navigation system, to provide the machine with additional functionality. The machine may be trained to determine boundaries for a work region, including any obstacles in the work region.

While described as an autonomous mower, such a configuration is illustrative only as systems and methods described herein also have application to other autonomous machines including, for example, commercial mowing products, other working machines or vehicles (e.g., debris blowers/vacuums, aerators, dethatchers, material spreaders, snow throwers, weeding machines for weed remediation mobile watering/treating vehicles), indoor working vehicles such as vacuums and floor scrubbers/cleaners (e.g., that may encounter obstacles), construction and utility vehicles (e.g., trenchers), observation vehicles, and load transportation (e.g., including people and things, such as people movers and hauling equipment). Furthermore, the autonomous machines described herein may employ various types of navigation, such as random, modified random, or specific path planning, to carry out their intended functionality.

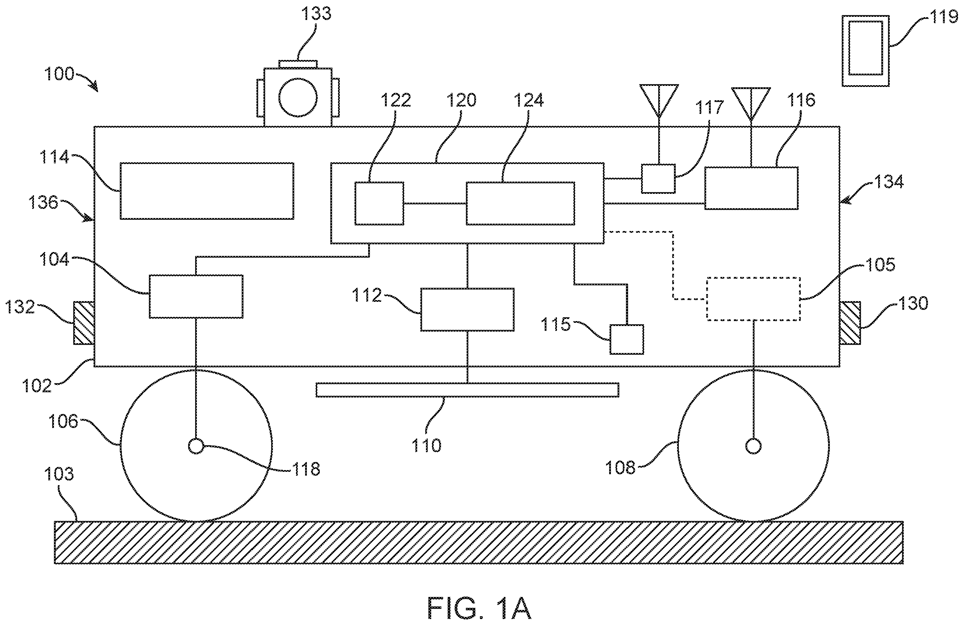

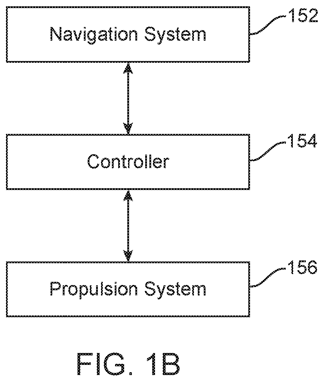

It is noted that the terms "have," "include," "comprises," and variations thereof, do not have a limiting meaning, and are used in their open-ended sense to generally mean "including, but not limited to," where the terms appear in the accompanying description and claims. Further, "a," "an," "the," "at least one," and "one or more" are used interchangeably herein. Moreover, relative terms such as "left," "right," "front," "fore," "forward," "rear," "aft," "rearward," "top," "bottom," "side," "upper," "lower," "above," "below," "horizontal," "vertical," and the like may be used herein and, if so, are from the perspective shown in the particular figure, or while the machine (e.g., mower **100)** is in an operating configuration (e.g., while the machine **100** is positioned such that wheels **106** and **108** rest upon a generally horizontal ground surface **103** as shown in **FIG. 1****).** These terms are used only to simplify the description, however, and not to limit the interpretation of any embodiment described. Further, the terms "determine" and "estimate" may be used interchangeably herein.

While the construction of the actual working machine is not necessarily central to an understanding of embodiments of this disclosure, **FIGS. 1A** and **1B** schematically illustrates an exemplary autonomous working machine configured as an autonomous lawn mower **100,** which forms part of a lawn mowing system that may include other components such as a charging base (not shown). As shown in this view, the mower **100** includes a housing **102** (e.g., frame or chassis with a shroud) that carries and/or encloses various components of the mower as described below. The mower **100** may further include ground support members, such as wheels, rollers, or tracks. In the illustrated embodiment, the ground support members include one or more rear wheels **106** and one or more front wheels **108,** that support the housing **102** upon a ground (grass) surface **103.** As illustrated, the front wheels **108** are used to support a front-end portion **134** of the mower housing **102** and the rear wheels **106** are used to support a rear-end portion **136** of the mower housing.

One or both rear wheels **106** may be driven by a propulsion system (e.g., including one or more electric wheel motors **104)** to propel the mower **100** over the ground surface **103.** In some embodiments, the front wheels **108** may freely caster relative to the housing **102** (e.g., about vertical axes). In such a configuration, mower direction may be controlled via differential rotation of the two rear wheels **106** in a manner similar to a conventional zero-turn-radius (ZTR) riding mower. That is to say, the propulsion system may include a separate wheel motor **104** for each of a left and right rear wheel **106** so that speed and direction of each rear wheel may be independently controlled. In addition, or alternatively, the front wheels **108** could be actively steerable by the propulsion system (e.g., including one or more steer motors **105)** to assist with control of mower **100** direction, and/or could be driven by the propulsion system (i.e., to provide a front-wheel or all-wheel drive mower).

An implement (e.g., a grass cutting element, such as a blade **110)** may be coupled to a cutting motor **112** (e.g., implement motor) carried by the housing **102.** When the motors **112** and **104** are energized, the mower **100** may be propelled over the ground surface **103** such that vegetation (e.g., grass) over which the mower passes is cut by the blade **110.** While illustrated herein using only a single blade **110** and/or motor **112,** mowers incorporating multiple blades, powered by single or multiple motors, are contemplated within the scope of this disclosure. Moreover, while described herein in the context of one or more conventional "blades," other cutting elements including, for example, disks, nylon string or line elements, knives, cutting reels, etc., are certainly possible without departing from the scope of this disclosure. Still further, embodiments combining various cutting elements, e.g., a rotary blade with an edge-mounted string trimmer, are also contemplated.

The mower **100** further includes a battery **114,** which may be a battery having a lithium-based chemistry (e.g., lithium-ion). Other embodiments may utilize batteries of other chemistries. It is further noted that, while shown as using independent blade and wheel motors, such a configuration is illustrative only as embodiments wherein blade and wheel power is provided by a single motor are also contemplated. The battery **114** is coupled to and supported by the housing **102.**

The mower **100** may further include one or more sensors to provide location data. For instance, some embodiments may include a global positioning system (GPS) receiver **116** (or other position sensor that may provide similar data) that is adapted to estimate a position of the mower **100** within a work region and provide such information to a controller **120** (described below). In other embodiments, one or more of the wheels **106, 108** may include encoders **118** that provide wheel rotation/speed information that may be used to estimate mower position (e.g., based upon an initial start position) within a given work region. The mower **100** may also include a sensor **115** adapted to detect a boundary wire, which could be used in addition to vision-based navigational techniques.

The mower **100** may optionally include one or more front obstacle detection sensors **130** and one or more rear obstacle detection sensors **132,** as well as other sensors, such as side obstacle detection sensors (not shown). The obstacle detection sensors **130, 132** may be used to detect an obstacle in the path of the mower **100** when travelling in a forward or reverse direction, respectively (the mower **100** may be capable of mowing while moving in both forward and reverse directions). As illustrated, the sensors **130, 132** may be located at the front-end portion **134** or rear end-portion **136** of the mower **100,** respectively. In addition to the sensors described, other sensors now known or later developed may also be incorporated into the mower **100.**

The mower **100** may include one or more vision-based sensors to provide localization data, such as position, orientation, or velocity. The vision-based sensors may include one or more cameras **133** that capture or record image data for use with a vision system. The cameras **133** may be described as part of the vision system of the mower **100.** Types of image data include, for example, training image data and/or operational image data. Operational image data may include various monitoring and security image data as further described below.

The one or more cameras may be capable of detecting visible light, non-visible light, or both. The one or more cameras may establish a total field of view of at least 30 degrees, at least 45 degrees, at least 60 degrees, at least 90 degrees, at least 120 degrees, at least 180 degrees, at least 270 degrees, or even at least 360 degrees, around the autonomous machine (e.g., mower **100).** The field of view may be defined in a horizontal direction, a vertical direction, or both directions. For example, a total horizontal field of view may be 360 degrees, and a total vertical field of view may be 45 degrees. The field of view may capture image data above and below the height of the one or more cameras.

In some embodiments, the mower **100** includes four cameras **133.** One camera **133** may be positioned in each of one or more directions including a forward direction, a reverse direction, a first side direction, and a second side direction (e.g., Cardinal directions relative to the mower **100).** One or more camera directions may be positioned orthogonal to one or more other cameras **133** or positioned opposite to at least one other camera **133.** The cameras **133** may also be offset from any of these directions (e.g., at a **45** degree or another non-right angle).

The mower **100** may include one or more illumination sources **140** that may be activated by the controller **120.** The one or more illumination sources **140** may be incorporated in one or more of the cameras **133** or attached to the housing **102.** The illumination source **140** may illuminate one or more areas around the mower **100.** The illumination source **140** may be configured to project light above a ground level. This may prevent the one or more cameras of the cameras **133** from being blinded by reflections off the ground. Any suitable type of illumination source **140** may be used, such as a light-emitting diode.

The mower **100** also includes the controller **120** adapted to monitor and control various mower functions. The controller **120** may include a processor **122** that receives various inputs and executes one or more computer programs or applications stored in memory **124.** The memory **124** may include computer-readable instructions or applications that, when executed, e.g., by the processor **122,** cause the controller **120** to perform various calculations and/or issue commands. That is to say, the processor **122** and memory **124** may together define a computing apparatus operable to process input data and generate the desired output to one or more components/devices. For example, the processor **122** may receive various input data including positional data from a GPS receiver **116** and/or wheel encoders **118** and generate speed and steering angle commands to the drive wheel motor(s) **104** to cause the drive wheels **106** to rotate (at the same or different speeds and in the same or different directions). In other words, the controller **120** may control the steering angle and speed of the mower **100,** as well as the speed and operation of the cutting blade **110.**

Reference herein may be made to various parameters, data, or data structures, which may be handled in the controller **120,** for example, by being processed by the processor **122** or stored in or retrieved from the memory **124.** The controller **120** may use the processor **122** and memory **124** in different systems. For example, one or more processors **122** and memory **124** may be included in each different system. For example, in some embodiments, the controller **120** may form part of a vision system, which may include a processor **122** and memory **124.** The controller **120** may also at least partially define a navigation system, which may also include a processor **122** and memory **124** the same or separate from the processor **122** and memory **124** of the vision system.

Each system may also be described as having its own controller **120.** For example, the vision system may be described as including one controller **120** and the navigation system and security system may be described as having their own separate controllers **120,** i.e., the mower **100** may be described as having multiple controllers **120.** In general, as used herein, the term "controller" may be used to describe components of a system that receive inputs and provide commands to control various other components of the system.

In addition, the mower **100**/controller **120** may be in operative communication (e.g., via a wireless radio **117)** with a separate device, such as a remote computer **119.** While not wishing to be bound to any specific configuration, the remote computer **119** could be configured as a desktop computer, cellular phone, tablet, wearable computer, or networked server. Conventional network hardware including gateways, routers, and wireless access points may be utilized to permit communication between the mower **100** and a local area network and/or a wide area network.

In view of the above, it will be readily apparent that the functionality of the controller **120** may be implemented in any manner known to one skilled in the art. For instance, the memory **124** may include any volatile, non-volatile, magnetic, optical, and/or electrical media, such as a random-access memory (RAM), read-only memory (ROM), non-volatile RAM (NVRAM), electrically-erasable programmable ROM (EEPROM), flash memory, and/or any other digital media. While shown as both being incorporated into the controller **120,** the memory **124** and the processor **122** could be contained in separate modules.

The processor **122** may include any one or more of a microprocessor, a controller, a digital signal processor (DSP), an application specific integrated circuit (ASIC), a field-programmable gate array (FPGA), and/or equivalent discrete or integrated logic circuitry. In some embodiments, the processor **122** may include multiple components, such as any combination of one or more microprocessors, one or more controllers, one or more DSPs, one or more ASICs, and/or one or more FPGAs, as well as other discrete or integrated logic circuitry. The functions attributed to the controller **120** and/or processor **122** herein may be embodied as software, firmware, hardware, or any combination of these. Certain functionality of the controller **120** may also be performed in the "cloud" or other distributed computing systems operably connected to the processor **122.**

In **FIG. 1A****,** schematic connections are generally shown between the controller **120** and the battery **114,** wheel motor(s) **104,** blade motor **112,** optional boundary wire sensor **115,** wireless radio **117,** and GPS receiver **116.** This interconnection is illustrative only as the various subsystems of the mower **100** could be connected in most any manner, e.g., directly to one another, wirelessly, via a bus architecture (e.g., controller area network (CAN) bus), or any other connection configuration that permits data and/or power to pass between the various components of the mower. Although connections with some of the sensors **130, 132, 133** are not shown, these sensors and other components of the mower **100** may be connected in a similar manner. The wireless radio **117** may communicate over a cellular or other wide area network (e.g., over the internet), a local area network (e.g., IEEE 802.11 "Wi-Fi"), or a personal area or peer-to-peer network ("P2P," e.g., "Bluetooth") with the remote computer **119** (the remote computer may again be configured as, for example, a cellular phone, tablet, desktop, server, or wearable computer). In turn, the remote computer **119** may communicate with other devices over similar networks and, for example, may be used to connect the mower **100** to the internet.

In some embodiments, various functionality of the controller or controllers **120** described herein may be offloaded from the mower **100.** For example, recorded image data may be transmitted to a remote server (e.g., in the cloud) using the wireless radio **117** and then processed or stored.

The mower **100** may utilize the exemplary vision and navigation systems to permit autonomous operation of the mower within a given work region(s). More information regarding exemplary operation and navigation of the mower **100** may be found, for example, in U.S. Provisional Patent Application No. 62/818,893.

Components of the vision and navigation systems (e.g., the cameras **133)** may, in some embodiments, be utilized in low-light conditions. In addition to addressing navigation of dimly lit areas, the vision and navigations systems may be used to conserve power when mowing in low-light conditions (e.g., night).

In **FIG. 1B****,** a schematic representation of various systems for navigating an autonomous machine (e.g., mower **100)** to a destination is shown. Systems for navigating an autonomous machine may include navigation system **152,** a controller **154** (e.g., the controller **120** of **FIG. 1A****),** and a propulsion system **156.** Although the controller **154** is illustrated separately from the other systems, the controller may be described as being part of any suitable system of the autonomous machine, such as the navigation system **152,** the propulsion system **156,** or both (e.g., a distributed processing system).

The navigation system **152** is used to determine when and where the mower 100 should be directed during operation (e.g., online mode).

The propulsion system **156** may provide propulsion to an autonomous machine (e.g., mower **100)** to traverse over a ground surface. The propulsion system **156** may include a propulsion controller operably coupled to a motor (e.g., electric wheel motors **104).**

The controller **154** is operably coupled to the navigation system **152** and the propulsion system **156** to control operation thereof. The controller **154** may be configured to receive data and signals from vision system **152** and propulsion system **156** and to provide commands to the navigation and propulsion systems.

During operation, the autonomous machine may decide to return to a base station for charging. Various techniques of this disclosure may be described as "intelligent return to home" or "intelligent return to base" techniques. The present disclosure provides techniques that include using a navigation system, work region mapping, and path planning to return the autonomous machine on a direct, obstacle-free route to the base station for charging. These techniques may optimize, or maximize, energy usage and time for mowing.

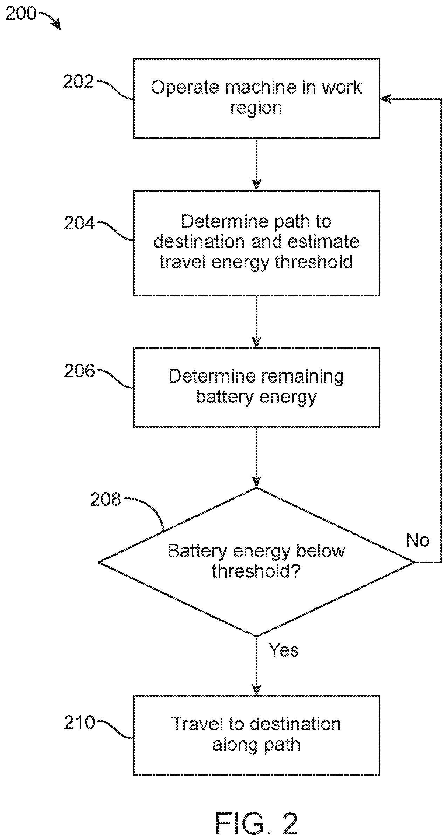

**FIG. 2** shows one example of a method **200** for navigating and charging an autonomous machine, such as mower **100.** The method **200** includes operating the autonomous machine in a work region in process **202.** Operation of the machine may be based on trained boundaries within the work region. Various types of boundaries may define a containment zone, an exclusion zone, or a transit path. An exclusion zone may be defined, for example, around an obstacle in the work region.

The method **200** includes determining a path to a destination and estimating a travel energy threshold required to travel to the destination in process **204.** In some embodiments, the destination is a base station or docking station. The estimated travel energy threshold may be determined based on the estimated travel energy required to traverse the determined path. In general, the threshold is larger than the estimated travel energy to ensure the machine can reach the destination. In some embodiments, the threshold may be determined based on a sufficient safety factor or safety margin (e.g., an additional 5, 10, 20, or 25 percent).

The method **200** also includes determining the remaining battery energy in process **206.** Any suitable technique may be used to determine the remaining battery energy known to one skilled in the art having the benefit of this disclosure. In some embodiments, the remaining battery energy may be determined using estimates based on operation conditions or measurements made periodically or in real-time.

In process **208,** the method **200** may compare the remaining battery energy to the threshold. If the remaining battery energy is higher than or equal to the threshold, the method **200** may return to operating the machine in the work region in process **202,** determining the path to destination and estimating the travel energy threshold in process **204,** and determining the remaining battery energy in process **206.**

The remaining battery energy and the estimated travel energy may change from position-to-position as the machine operates. In general, the remaining battery energy decreases during operation, and the estimated travel energy changes based on the distance of the path to the destination.

The path to the destination, the estimated travel energy threshold, and the remaining battery energy may be calculated one or multiple times during operation of the machine in the work region to facilitate the ability for the machine to reach the destination. In some embodiments, the path to the destination, the estimated travel energy threshold based on the estimated travel energy, and the remaining battery energy may be periodically or continuously updated in real-time in a manner sufficient to compare the remaining battery energy to the threshold before the remaining battery energy can drop below the estimated travel energy. In other words, the method **200** and machine may be configured to ensure that the remaining battery energy always exceeds the estimated travel energy.

If the remaining battery energy is lower than the threshold, the method **200** may include commanding the machine to travel to the destination along the determined path in process **210.** In some embodiments, the path to the destination may be described as a direct, obstacle-free route to the base station. The machine may charge upon reaching the destination, or base station. When the machine is fully charged, the machine may continue to operate in the work region according to schedule.

By having an estimate of how much energy is required to drive, or travel, to the base station, and an estimate of remaining battery energy, the machine can continue to mow until it actually needs to recharge. Time spent traveling to and from the base station may be minimized.

The estimated travel energy and the related threshold may be determined based on the distance along the path and an estimated energy consumed per unit distance.

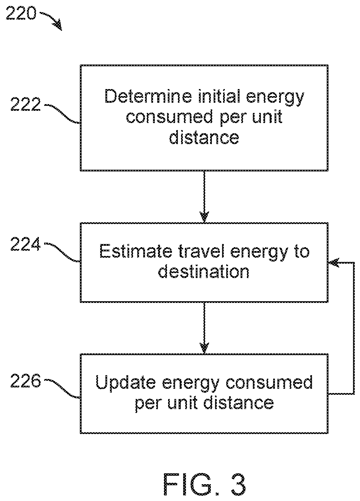

**FIG. 3** shows one example of a method **220** for determining an estimated travel energy, which may be used to derive the threshold, based on an estimated energy consumed per unit distance. The method **220** may include determining an initial energy consumed per unit distance in process **222.**

Any suitable technique for determining energy consumed per unit distance may be used known to one skilled in the art having the benefit of this disclosure. In some embodiments, a energy consumed per unit distance, such as the initial energy consumed per unit distance, may be based on a maximum or "worst case" amount of energy consumed for a potentially large yard, tough terrain, wet grass, etc.

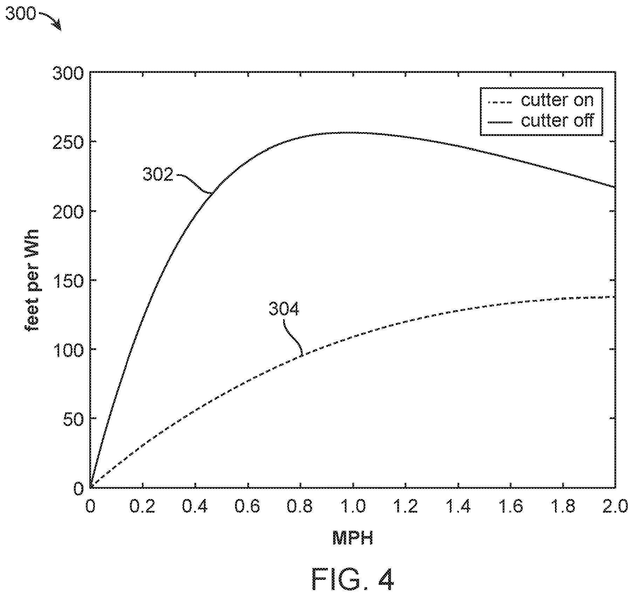

The energy consumed per unit distance may depend on various parameters, for example, whether the motor powering the implement is turned on or off and the speed of the mower. In some embodiments, a table of energy consumed per unit distance versus speed may be determined and stored as data. In some embodiments, such more than one table may be determined and stored as data to represent energy consumed per unit distance versus speed, for example, when the implement motor is ON and when the implement motor is OFF as shown in **FIG. 4****.**

**FIG. 4** shows one example of plots **302** and **304** that each represent a different table. As illustrated, the plot **302** represents energy consumed per unit distance (e.g., feet per watt-hour on the y-axis) versus speed (e.g., miles per hour on the x-axis) when the implement motor is OFF. The plot **304** represents energy consumed per unit distance versus speed plotted on the same axes when the implement motor is ON.

In some cases, the energy consumed per unit distance may increase with speed until a particular speed and then begin decreasing, for example, as shown around 1 miles per hour in plot **302.** In other cases, the energy consumed per unit distance may increase with speed throughout the range of the mower, for example, as shown in plot **304** from 0-2 miles per hour.

The method **220** may estimate the travel energy to the destination based on the initial energy consumed per unit distance in process **224.** The initial energy consumed per unit distance may continue to be used for the first few days of autonomous mowing. Over time, the machine can learn about terrain and turf load for the work region. For example, the machine may take measurements from one or more sensors to determine a measured energy consumed per unit distance. Such sensors may detect, for example, wheel load, battery levels, or other indications of energy usage by the mower while traveling over different parts of the work region.

The method **220** may include updating the energy consumed per unit distance based on the measurements in process **226.** This updated information can be used to trace a path home (e.g., base station) on a regular basis and to compute a more accurate estimate of energy required to travel to the base station. In some embodiments, the path to the destination may be updated more frequently than the energy consumed per unit distance. In one example, the path to the destination may be updated from position-to-position du ring operation, whereas the energy consumed per unit distance may be updated on a daily or weekly basis. Other update frequencies are also contemplated.

Repeated updates to the estimate may account for changes in the work region over time. For example, as turf (e.g., tall or short grass) change over time, the energy per unit distance may also change over time. Frequent turf load calculations may be performed to provide more accurate estimated of the required energy to traverse a work region.

Repeated updates to the estimate may also account for changes in data collected about the work region over time. As more data is collected about the work region, which may be stored in a terrain map, better estimates of the impact of terrain (e.g., slopes) on the energy may be calculated, for example, to better predict a hill climb. In other words, the energy per unit distance is also based on the terrain map.

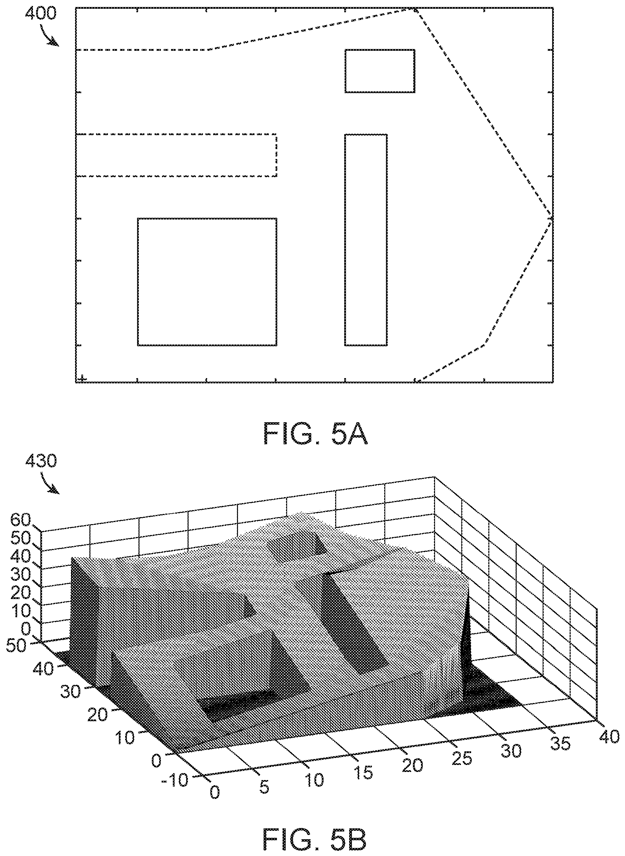

**FIGS. 5A** and **5B** show an overhead two-dimensional map **400** (e.g., grid) of a work region including three exclusion zones and a perspective view of an estimated travel distance map **430** for the same work region. The maps may include a plurality of positions in the work region, and outside of the exclusion zones, in a two-dimensional plane (e.g., xy-plane).

The estimated travel distance map **430** provides an estimate of the obstacle-free distance (e.g., z-axis or vertical axis) required for the machine to travel to the base station, which is located at the lower left of the respective maps. The estimated travel distance map **430** may be described as a "wavefront" grid.

The estimated travel distance map **430** may be determined at least one time for the work region. For example, the estimated travel distance map **430** may be calculated once after all zones in the work region are trained. The distance to the base station may be determined by the value of the vertical axis (e.g., z-axis) at the position of the machine in the two-dimensional grid. To estimate the travel energy to return to the base station, the distance may be multiplied by the current estimated energy consumed per unit distance. Alternatively, any other technique to calculate travel energy to return to the base station known to one skilled in the art having the benefit of this disclosure may be used.

The estimated travel distance map **430** may be used to navigate the machine to the destination. The path to the destination may be determined, for example, by allowing the mower to travel "downhill" on the wavefront grid, which may provide a direct and obstacle-free route to the destination.

The work region is mapped with a terrain map. For example, the terrain map may be developed during a training mode of the machine, or during subsequent mowing operations. Regardless, the terrain map may contain information about the terrain of the work region, for example, elevation, grade, identified obstacles (e.g., permanent obstacles), identified stuck areas (e.g., areas the mower has gotten stuck whether due to grade or other traction conditions), or other information that may facilitate the ability of the machine to traverse the work region. The terrain map is used to adjust the estimated travel energy to the destination and the related threshold, by refining the estimated energy consumed per unit distance or adjusting the estimated travel distance represented on the map **430.**

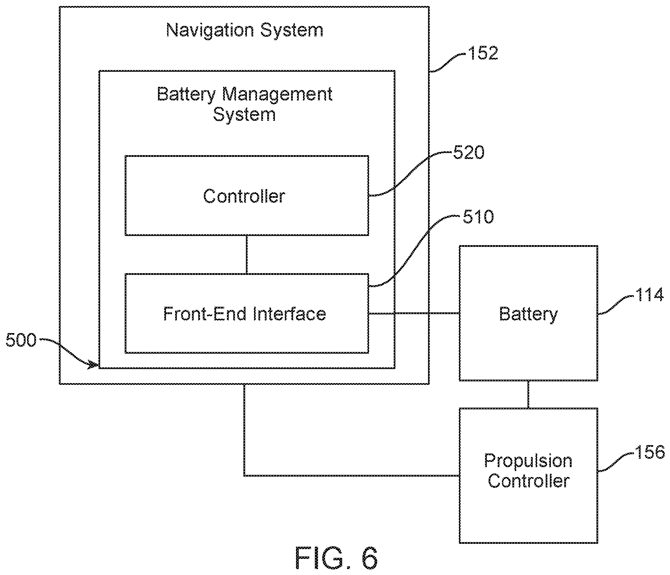

**FIGS. 6-11** relate to a battery management system. The autonomous machine, such as mower **100 (****FIG. 1A****),** may include a battery management system **500** to determine and manage the remaining battery energy in the machine. In some applications, the bulk of the work being done by the autonomous machine is by motors that output speed and torque based on voltage and current, otherwise known as power, which may be measured in watts (W). In order to provide an estimate of how much work motors can do with a battery, the energy remaining in the battery may be determined by the machine.

Energy may be measured watt-hours and may be based on both capacity and potential energy. Capacity may be measured in ampere-hours, and potential energy may be measured in voltage. Energy, more so than capacity or voltage alone, may provide a complete measure of the cumulative work that can be done by the machine. Tracking energy may facilitate more precise estimation of work that can be done compared to measuring capacity or voltage alone, especially when powering unpredictable loading patterns with unregulated voltages.

As illustrated in **FIG. 6****,** the battery management system **500** may be considered part of the navigation system **152,** which may be coupled to a housing or chassis of the autonomous machine. The battery management system **500** may additionally, or alternatively, be considered part of another processing system operably coupled to the battery **114.** The propulsion controller **156** may be operably coupled to the navigation system **152** and to the battery **114.** Energy from the battery **114** may be used to provide energy to the propulsion controller **156** for motivating the autonomous machine.

The battery management system **500** may include any suitable components to carry out functionality to determine remaining battery energy. The battery management system **500** may include a front-end interface **510,** which may include an analog-to-digital converter (ADC), to operably couple one or more nodes of the battery **114.** The front-end interface **510** may also be described as an analog front end. The battery management system **500** may also include a controller **520,** such as a microcontroller, or other processing circuitry. In general, the front-end interface **510** may provide measurements of various battery parameters, such as voltage, current, and temperature, to the controller **520** upon request by the controller. The controller **520** may determine useful information based on the measurements by the front-end interface **510.**

The front-end interface **510** may include various circuitry to make measurements, such as voltage sensing circuitry, current sensing circuitry, and temperature sensing circuitry. One example of current sensing circuitry, or a current sensor, may include a shunt resistor, such as a 1 milliohm resistor.

The front-end interface **510** and the controller **520** may each include a chip operably coupled to one another and to a circuit board, which may be a printed circuit board. One non-limiting example of a chip suitable for the front-end interface **150** is a Texas Instruments BQ76920 Analog Front End. Any suitable communication protocol may be used by the front-end interface **510** and the controller **520** to send and receive information between them, such as I²C or another digital communication protocol.

Additional functionality may also be included in the battery management system 500, such as short-circuit protection. The front-end interface **510** may measure current at a very high rate, such as one measurement every **100** microseconds or less. A spike in measured current may trigger an open circuit to shutdown use of the battery **114,** for example, by the controller **520** or front-end interface **510.** Further, the controller **520** or the front-end interface **510** may be able to independently control the direction of current flow based on, for example, measured voltage, current, or temperature. In one example, the controller **520** or front-end interface **510** may detect a battery voltage that is too high (or exceeds a threshold) and may block the charging current to prevent further voltage increases while still allowing the battery **114** to discharge into the load, such as propulsion controller **156.** This may be implemented, for example, by controlling banks of bidirectional power MOSFET transistors.

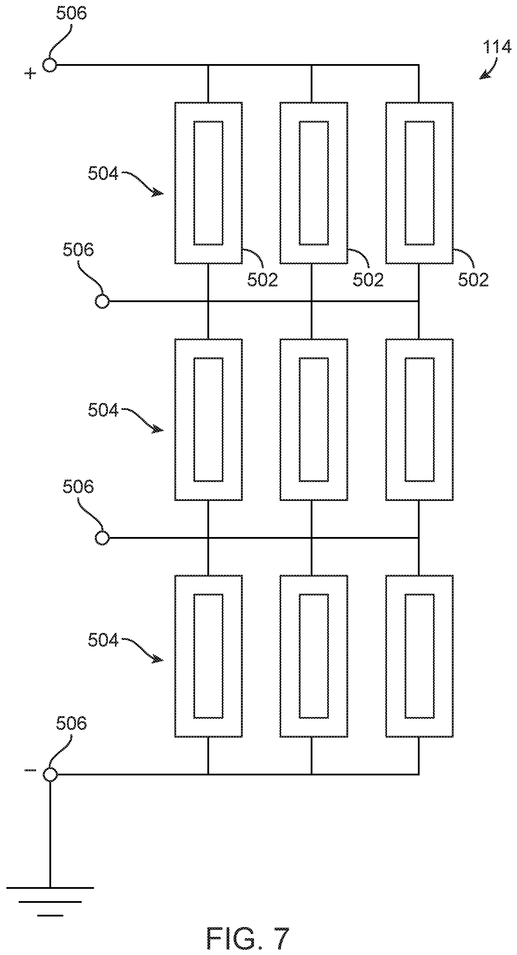

As can be seen in **FIG. 7****,** the battery **114** may include, or be formed of, one or more battery cells **502.** Multiple battery cells **502,** or a plurality of battery cells, may be arranged into a series, parallel, or series-parallel configuration. As illustrated, the battery **114** is formed in a series-parallel configuration including three series cells **504** electrically coupled in series with each series cell **504** including three battery cells **502** electrically coupled in parallel. Three series cells **504** electrically coupled in series may be described as a 3S configuration. Any suitable number of series cells **504** may be included, such as 2, 3, 4, 5, or 6. In one example, a battery having lithium-ion battery cells, each having a nominal voltage equal to 3.6 V, in a 5S configuration may have a nominal voltage equal to 18 V. Each series cell **504** may include any suitable number of battery cells **502** in parallel, such as 1, 2, 3, 4, or 5.

The battery **114** may be operably coupled to a battery management system, such as battery management system **500 (****FIG. 6****),** in any suitable manner. One or more nodes **506,** such as the cathode and the anode, of the battery **114** may be operably coupled to the battery management system, which may allow the battery management system to measure certain parameters, such as the current and voltage drop of the battery **114.** One or more nodes **506** between one or more series cells **504** may be operably coupled to the battery management system, which may allow the battery management system to measure certain parameters, such as the voltage drop of each series cell **504.**

Various characteristics of the battery **114** may change over time, such as the internal resistance or impedance of the battery. The age of the battery **114** may increase with each charge and discharge cycle. As the battery age increases, the impedance of the battery **114** may increase. The impedance of the battery **114** may be estimated, for example, based on battery age.

The change in impedance versus battery age may be predetermined, for example, in a lab setting. The measurements may be used to determine the change in impedance versus battery age for similar batteries. In one example of measuring the change in impedance versus battery age, the impedance of a battery may be measured after the battery is assembled. The battery may be cycled until the battery can no longer hold a charge, for example, using 1500 to 2000 cycles. A battery may be described as no longer holding a charge when the battery cannot provide power long enough to meet predetermined minimum runtime requirements of an application, for example, enough power to mow for at least a minimum amount of time, such as 15, 30, or 45 minutes.

The impedance of the battery may be measured after no longer being able to hold a charge. A line fitting algorithm may be applied to the impedance change versus battery age measured in cycles, such as a linear line-fitting algorithm. A slope of the line may be determined, which may be used to estimate the impedance of similar batteries as they age. In general, the impedance of the battery increases with age or each cycle.

The change in the impedance of the battery versus battery age may depend on battery cell chemistry and the battery cell configuration of the battery. The battery cell configuration may represent the series-parallel configuration of cells, as well as the impedance of the circuit board operably coupled to the battery cells. A slope may be determined for similar batteries, such as for each unique combination of battery cell chemistry and the battery cell configuration. The slope may be stored as data and associated with a battery chemistry identified and a battery cell configuration in a memory of the battery management system. The slope may be retrieved for use in determining the remaining battery energy.

In operation, the battery management system **500** may calculate a battery impedance based on an initial battery impedance and an impedance versus cycle slope. In one example, the battery management system **500** may measure the initial impedance of a newly assembled battery **114** before the battery enters into service, which may have a battery age of zero or close to zero. After the battery **114** is put into service and begins charging and discharging, the predetermined slope, which may be described as an impedance versus cycle slope, for the particular battery chemistry and battery cell configuration may be retrieved from memory and applied to the measured initial impedance to provide an estimate of the battery impedance based on the battery age. In another example, the impedance of the battery **114** may be measured or estimated based on a voltage drop and a known load.

As used herein, the term "cycle" refers to one complete charge and one complete discharge of the battery **114** in any order. The number of cycles of the battery may be stored as data in memory and retrieved by the battery management system to determine an estimate of the impedance. The number of cycles may be determined based on partial or whole charges and discharges. In one example, if a 12 amp-hour battery is discharged from full to half capacity (6 amp-hours) and subsequently charged from half capacity to full capacity, the battery management system may increment the number of cycles by one-half of a full cycle. In another example, a 12 amp-hour battery that discharges from full to 0 amp-hours and subsequently charges back to 12 amp-hours may result in the battery management system incrementing the number of cycles by one full cycle. Any suitable increment may be used to track the cycles.

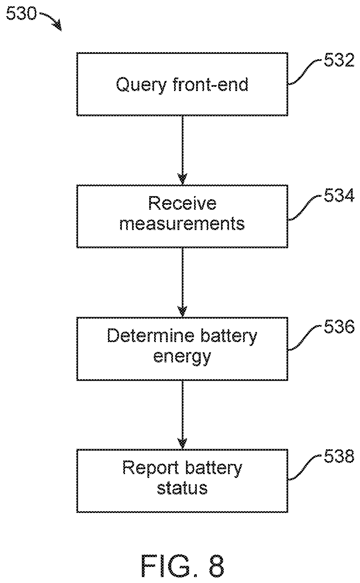

**FIG. 8** shows one example of a method **530** for operating a controller, such as the controller **520,** to monitor the status of a battery. The method **530** may include querying the front-end interface in process **532.** The controller may query the front-end interface periodically. For example, the controller may query the front-end every 250 milliseconds, or once every quartersecond. In response, the front-end interface may provide some or all measurements about the battery to the controller.

Measurements from the front-end interface may be received in process **534.** Various examples of measurements that may be received include voltage, current, and temperature.

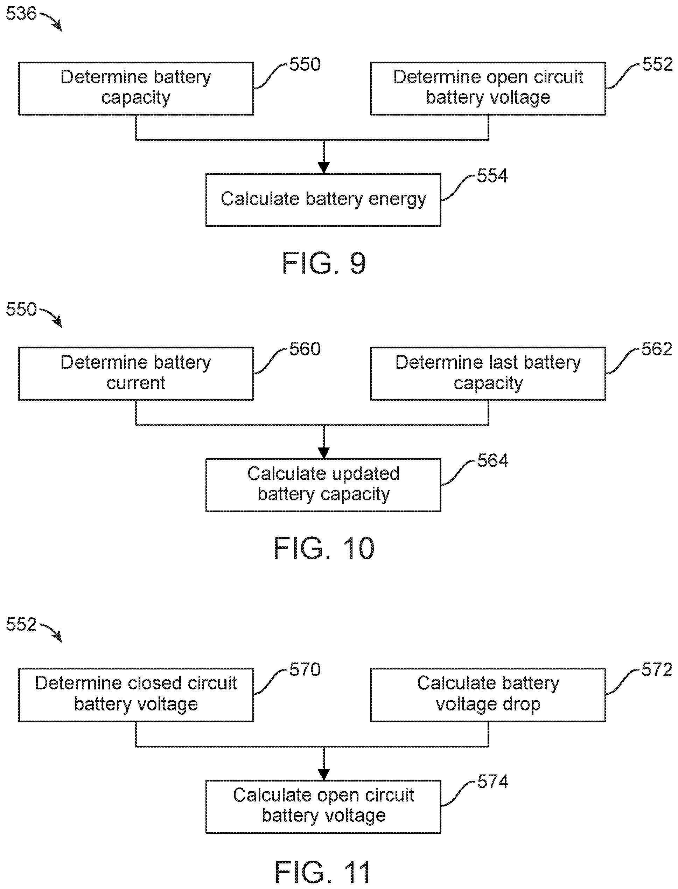

Remaining battery energy may be determined in process **536** based on the received measurements. Any suitable technique may be used to determine the remaining battery energy including those described with respect to **FIGS. 9-11****.**

Battery status may be reported in process **538,** which may include the remaining battery energy or other determinations based on the received measurements. The battery status may be reported to any suitable system, such as other parts of the navigation system or to a user interface. Non-limiting examples of a battery status report may include remaining energy, state of charge, cut-off warning flags, minimum and maximum cell voltages, and maximum cell temperature. Remaining energy may be provided in watt-hours or milliwatt-hours. State of charge may be provided in amp-hours or milliamp-hours. Cut-off warnings flags may serve to warn of an impending loss of battery power as a result of, but not limited to, low remaining energy, voltage limits, current limits, or temperature limits.

The navigation system may provide at least one of an estimated travel energy threshold, a remaining battery energy, or a battery charging rate to, for example, a scheduler, determine a start time of a next mowing session. The battery management system of the navigation system may determine a battery charging rate based on at least one of a start time of the next mowing session, an estimated travel energy threshold, or a remaining battery energy.

Any suitable technique to take measurements and to determine the battery status may be used. In one example, the front-end interface may measure a current or voltage as an average over a time period. The voltage may be averaged over 50 milliseconds, and the current may be averaged over 250 milliseconds. The controller may initiate a query every 250 milliseconds to receive the measurements. Capacity may be determined using a unit, or dimensional, conversion based on the received current measurement. The current measurement may be received in milliamp-quarterseconds, which may be converted to milliamp-seconds, to milliamp-hours, and to ampere-hours, which may be indicative of the change in battery capacity. Then, the change in battery capacity may be converted to watt-hours using a voltage determination. The remaining battery energy determination, in watt-hours, may be updated every 1 second using an average of four battery capacity determinations per quartersecond and the voltage determination. The voltage determination may be based on measuring the voltage of each series cell.

**FIG. 9** shows one example of a method **536** for determining battery energy. Battery capacity may be determined in process **550.** Open circuit battery voltage may be determined in process **552.** Battery energy may be calculated in process **554,** for example, based on the battery capacity and the open circuit battery voltage as determined. The battery energy may be calculated by multiplying the battery capacity by the open circuit battery voltage.

**FIG. 10** shows one example of a method **550** for determining battery capacity. Battery current may be determined in process **560.** The last battery capacity may be determined in process **562.** Updated battery capacity may be calculated in process **564,** for example, based on the battery current and the current capacity.

The battery current may be determined in process **560** over any suitable time period. A change in battery capacity may be determined based on the battery current and a particular time period, such as 0.1, 0.25, 0.5, or 1 second. For example, the particular time period may be 0.25 seconds, or one quartersecond, which may represent an average of four measurements by a front-end interface. The battery current may be integrated over the particular time period to calculate the change in battery capacity.

The last battery capacity may be determined in process **562** using a previously determined battery capacity. For example, each determination of battery capacity may be stored as data and retrieved to calculate an updated battery capacity.

In general, the method **550** may facilitate determining relative changes in battery capacity based on current measurements. The battery capacity may be calibrated to an absolute, or non-relative, value using any suitable technique. In one example, the battery management system tracks changes in capacity from a known capacity state, such as full discharge. A battery may be fully discharged, which may correspond to a low voltage threshold. The battery management system may measure current from a zero, or no, capacity state to track capacity.

In some cases, the battery management system may measure current from a full charge state to track capacity. The voltage of the battery at full charge may change with battery age.

Battery age may also affect the full charge capacity. In other words, the full charge capacity may change with battery age. An updated full charge capacity may be determined, for example, based on fully discharging the battery and fully charging the battery while measuring current to track capacity until the current tapers down to a termination current. In some cases, the updated full charge capacity may be compared to the last full charge capacity and updated in response to the updated full charge capacity being lower than the last full charge capacity, for example, to limit false readings.

In another example, the battery management system tracks changes in capacity from an estimated capacity state. For example, when a battery first "wakes up," an approximation of battery capacity may be made based on measuring the voltage of the battery or battery cells. The approximate battery capacity may be segmented into buckets or categories. For example, non-limiting examples of capacity buckets are 10, 20, 50, 80, and 100 percent capacity. The approximation may be conservative by, for example, rounding down.

The updated battery capacity may be updated in process **564** by adding the change in battery capacity, which may be determined based on measuring battery current, to the last battery capacity. The last battery capacity may be known or estimated.

**FIG. 11** shows one example of a method **552** for determining open circuit battery voltage. Closed circuit battery voltage may be determined in process **570.** Battery voltage drop may be calculated in process **572.** Open circuit battery voltage may be calculated in process **574,** for example, based on closed circuit battery voltage and calculated battery voltage drop.

The closed circuit battery voltage may be determined in process **570** by measuring the voltage of the battery when the battery is placed under load. In particular, the load may be provided by an operating motor. As used herein in the context of the battery, a "load" refers to a component drawing a significant current, or at least a particular amount of current, from the battery, such as at least 10, 25, 50, or 100 milliamps detectable by current sensing circuitry. In some cases, the voltage of the battery may be measured based on voltage measurements of each series cell, which may facilitate monitoring the status or health of each series cell.

The battery voltage drop may be calculated in process **572** by measuring the battery current and calculating battery impedance. The battery impedance may be calculated based on battery age and an initial battery impedance. The initial battery impedance may be based on a measurement of battery impedance before the battery has been subjected to a substantial number of cycles, such as 1, 2, 5, or 10 cycles. Typically, the initial battery impedance is measured before the battery has completed even one cycle. The battery current may be measured, for example, with the front-end interface and current sensing circuitry. The battery voltage drop may be calculated by multiplying the battery current measurement with the battery impedance calculation.

The open circuit battery voltage may be determined in process **574** by adding the closed circuit battery voltage to the calculated battery voltage drop. The battery voltage drop may be determined based on the battery current and a calculated battery impedance.

All scientific and technical terms used herein have meanings commonly used in the art unless otherwise specified. The definitions provided herein are to facilitate understanding of certain terms used frequently herein and are not meant to limit the scope of the present disclosure.

Terms related to orientation, such as "top," "bottom," "side," and "end," are used to describe relative positions of components and are not meant to limit the orientation of the embodiments contemplated. For example, an embodiment described as having a "top" and "bottom" also encompasses embodiments thereof rotated in various directions unless the content of this disclosure clearly dictates otherwise.

The terms "coupled" or "connected" refer to elements being attached to each other either directly (in direct contact with each other) or indirectly (having one or more elements between and attaching the two elements). Either term may be modified by "operatively" and "operably," which may be used interchangeably, to describe that the coupling or connection is configured to allow the components to interact to carry out functionality.

As used herein, the term "configured to" may be used interchangeably with the terms "adapted to" or "structured to" unless the content of this disclosure clearly dictates otherwise.

Th singular forms "a," "an," and "the" encompass embodiments having plural referents unless its context clearly dictates otherwise.

The phrases "at least one of," "comprises at least one of," and "one or more of" followed by a list refers to any one of the items in the list and any combination of two or more items in the list.

As used herein, "have," "having," "include," "including," "comprise," "comprising" or the like are used in their open-ended sense, and generally mean "including, but not limited to." It will be understood that "consisting essentially of," "consisting of," and the like are subsumed in "comprising," and the like.

Reference to "one embodiment," "an embodiment," "certain embodiments," or "some embodiments," etc., means that a particular feature, configuration, composition, or characteristic described in connection with the embodiment is included in at least one embodiment of the disclosure. Thus, the appearances of such phrases in various places throughout are not necessarily referring to the same embodiment of the disclosure.

## Claims

1. An autonomous machine (100) comprising:
a housing (102) coupled to a maintenance implement (110) of the autonomous machine (100);
a battery (114) coupled to the housing (102);
a propulsion controller (156) operably coupled to the battery (114) and one or more motors (104) of the autonomous machine (100); and
a navigation system (152) operably coupled to the battery (114) and the propulsion controller (156), the navigation system (152) adapted to:
direct the autonomous machine (100) to operate in a work region;
determine a remaining battery energy; and
determine a path from a current position of the autonomous machine in the work region to a destination position in the work region;
**characterized in that** the navigation system (152) is further adapted to:
determine an estimated travel energy threshold required for the autonomous machine to travel to the destination position, wherein the estimated travel energy threshold is based on the path and an estimated energy consumed per unit distance;
generate a terrain map of the work region;
adjust the estimated energy consumed per unit distance based on the terrain map, and
adjust the estimated travel energy threshold based on the adjusted estimated energy consumed per unit distance.

2. The machine (100) according to claim 1, further comprising a set of wheels (106, 108) configured to support the housing (102) over a ground surface and the propulsion controller (156) is adapted to control speed and rotational direction of the wheels (106, 108) independently using the one or more motors (104), thereby controlling both speed and direction of the housing (102) over the ground surface.

3. The machine according to claim 1 or 2, wherein the navigation system (152) is further adapted to repeatedly update the energy consumed per unit distance based at least on a changing turf load over time learned by the autonomous machine.

4. A method for autonomous machine navigation comprising:
directing an autonomous machine (100) to operate in a work region;
determining a remaining battery energy representing an amount of energy remaining in a battery (114) of the autonomous machine (100); and
determining a path from a current position of the autonomous machine in the work region to a destination position in the work region;
**characterized by**:
determining an estimated travel energy threshold required for the autonomous machine to travel to the destination position, wherein the estimated travel energy threshold is based on the path and an estimated energy consumed per unit distance;
generating a terrain map of the work region via one or more sensors of the autonomous machine;
adjusting the estimated energy consumed per unit distance based on the terrain map, and
adjusting the estimated travel energy threshold based on the adjusted estimated energy consumed per unit distance.

5. The method according to claim 4, further comprising:
comparing the remaining battery energy to the estimated travel energy threshold; and
navigating the autonomous machine (100) along the path to the destination position in response to the remaining battery energy falling below the estimated travel energy threshold.

6. The method according to claim 4 or 5, wherein determining the path is based on a minimum distance traveled compared to one or more other possible paths to reach the destination position.

7. The method according to any of claims 4-6, wherein the path avoids obstacles in the work region.

8. The method according to any of claims 4-7, further comprising generating an estimated travel distance map representing a distance for each of a plurality of positions in the work region and determining the path based on the estimated travel distance map.

9. The method according to any of claims 4 to 8, further comprising determining the estimated energy consumed per unit distance based on a worst-case energy consumed per unit distance.

10. The method according to any of claims 4 to 9, further comprising:
determining the energy consumed per unit distance based on a measured energy consumed per unit distance from operation of the autonomous machine in the work region; and
repeatedly updating the energy consumed per unit distance based at least on a changing turf load learned over time by the autonomous machine.

11. The autonomous machine of claim 1, further comprising a battery management system (500) adapted to determine a remaining battery energy, wherein the terrain map includes information comprising at least one of grade, elevation, obstacles, and identified stuck areas in the work region.

12. The machine according to claim 11, wherein the remaining battery energy is determined based on a battery capacity and an open circuit battery voltage.

13. The machine according to claim 12, wherein the battery management system is adapted to determine the battery capacity based on a battery current over a particular time period and a last battery capacity.

14. The machine according to claim 12 or 13, wherein the battery management system is adapted to determine the battery capacity in response to a full discharge of the battery (114) or an estimated battery capacity.

## Patentansprüche

1. Autonome Maschine (100), umfassend:
ein Gehäuse (102), das mit einem Wartungswerkzeug (110) der autonomen Maschine (100) gekoppelt ist;
eine Batterie (114), die mit dem Gehäuse (102) gekoppelt ist;
eine Antriebssteuerung (156), die funktionsfähig mit der Batterie (114) und einem oder mehreren Motoren (104) der autonomen Maschine (100) gekoppelt ist; und
ein Navigationssystem (152), das funktionsfähig mit der Batterie (114) und der Antriebssteuerung (156) gekoppelt ist, wobei das Navigationssystem (152) ausgelegt ist zum:
Anweisen der autonomen Maschine (100), in einem Arbeitsbereich zu arbeiten;
Bestimmen einer verbleibenden Batterieenergie; und
Bestimmen eines Wegs von einer aktuellen Position der autonomen Maschine
im Arbeitsbereich zu einer Zielposition im Arbeitsbereich;
**dadurch gekennzeichnet, dass** das Navigationssystem (152) ferner ausgelegt ist zum:
Bestimmen eines geschätzten Fahrenergieschwellenwerts, der erforderlich ist, damit die autonome Maschine zur Zielposition fährt, wobei der geschätzte Fahrenergieschwellenwert auf dem Weg und einem geschätzten Energieverbrauch pro Entfernungseinheit basiert;
Erzeugen einer Geländekarte des Arbeitsbereichs;
Anpassen des geschätzten Fahrenergieschwellenwerts pro Entfernungseinheit basierend auf der Geländekarte, und
Anpassen des geschätzten Fahrenergieschwellenwerts basierend auf dem angepassten geschätzten Energieverbrauch pro Entfernungseinheit.

2. . Maschine (100) nach Anspruch 1, ferner umfassend einen Satz von Rädern (106, 108), die so konfiguriert sind, dass sie das Gehäuse (102) über einer Bodenoberfläche tragen, und wobei die Antriebssteuerung (156) dazu ausgelegt ist, die Geschwindigkeit und Drehrichtung der Räder (106, 108) unabhängig voneinander unter Verwendung des einen oder der mehreren Motoren (104) zu steuern, wodurch sowohl die Geschwindigkeit als auch die Richtung des Gehäuses (102) über der Bodenoberfläche gesteuert wird.

3. . Maschine nach Anspruch 1 oder 2, wobei das Navigationssystem (152) ferner dazu ausgelegt ist, den Energieverbrauch pro Entfernungseinheit wiederholt zu aktualisieren, und zwar basierend zumindest auf einer sich ändernden Rasenbelastung, die von der autonomen Maschine im Laufe der Zeit gelernt wird.

4. . Verfahren zur autonomen Maschinennavigation, umfassend:
Anweisen einer autonomen Maschine (100), in einem Arbeitsbereich zu arbeiten;
Bestimmen einer verbleibenden Batterieenergie, die eine in einer Batterie (114) der autonomen Maschine (100) verbleibende Energiemenge darstellt; und
Bestimmen eines Wegs von einer aktuellen Position der autonomen Maschine im Arbeitsbereich zu einer Zielposition im Arbeitsbereich;
**gekennzeichnet durch**:
Bestimmen eines geschätzten Fahrenergieschwellenwerts, der erforderlich ist, damit die autonome Maschine zur Zielposition fährt, wobei der geschätzte Fahrenergieschwellenwert auf dem Weg und einem geschätzten Energieverbrauch pro Entfernungseinheit basiert;
Erzeugen einer Geländekarte des Arbeitsbereichs mittels eines oder mehrerer Sensoren der autonomen Maschine;
Anpassen des geschätzten Energieverbrauchs pro Entfernungseinheit basierend auf der Geländekarte, und
Anpassen des geschätzten Fahrenergieschwellenwerts basierend auf dem angepassten geschätzten Energieverbrauch pro Entfernungseinheit.

5. . Verfahren nach Anspruch 4, ferner umfassend:
Vergleichen der verbleibenden Batterieenergie mit dem geschätzten Fahrenergieschwellenwert; und
Navigieren der autonomen Maschine (100) entlang des Wegs zur Zielposition als Reaktion darauf, dass die verbleibende Batterieenergie unter den geschätzten Fahrenergieschwellenwert fällt.

6. . Verfahren nach Anspruch 4 oder 5, wobei das Bestimmen des Wegs auf einer im Vergleich zu einer oder mehreren anderen möglichen Wegen zum Erreichen der Zielposition kürzesten zurückgelegten Strecke basiert.

7. . Verfahren nach einem der Ansprüche 4 bis 6, wobei der Weg Hindernisse im Arbeitsbereich umgeht.

8. . Verfahren nach einem der Ansprüche 4 bis 7, ferner umfassend das Erzeugen einer Karte der geschätzten Fahrstrecke, die eine Entfernung für jede einer Vielzahl von Positionen im Arbeitsbereich darstellt, und das Bestimmen des Wegs basierend auf der Karte der geschätzten Fahrstrecke.

9. . Verfahren nach einem der Ansprüche 4 bis 8, ferner umfassend das Bestimmen des geschätzten Energieverbrauchs pro Entfernungseinheit basierend auf dem Energieverbrauch pro Entfernungseinheit im ungünstigsten Fall.

10. . Verfahren nach einem der Ansprüche 4 bis 9, ferner umfassend:
Bestimmen des Energieverbrauchs pro Entfernungseinheit basierend auf einem gemessenen Energieverbrauch pro Entfernungseinheit aus dem Betrieb der autonomen Maschine im Arbeitsbereich; und
wiederholtes Aktualisieren des Energieverbrauchs pro Entfernungseinheit basierend zumindest auf einer sich ändernden Rasenbelastung, die von der autonomen Maschine im Laufe der Zeit gelernt wird.

11. . Autonome Maschine nach Anspruch 1, ferner umfassend ein Batteriemanagementsystem (500), das dazu ausgelegt ist, eine verbleibende Batterieenergie zu bestimmen, wobei die Geländekarte Informationen enthält, die mindestens eines der folgenden Elemente umfassen: Steigung, Höhe, Hindernisse und identifizierte Feststeckbereiche im Arbeitsbereich.

12. . Maschine nach Anspruch 11, wobei die verbleibende Batterieenergie basierend auf einer Batteriekapazität und einer Leerlaufspannung der Batterie bestimmt wird.

13. . Maschine nach Anspruch 12, wobei das Batteriemanagementsystem dazu ausgelegt ist, die Batteriekapazität basierend auf einem Batteriestrom über einen bestimmten Zeitraum und einer letzten Batteriekapazität zu bestimmen.

14. . Maschine nach Anspruch 12 oder 13, wobei das Batteriemanagementsystem dazu ausgelegt ist, die Batteriekapazität als Reaktion auf eine vollständige Entladung der Batterie (114) oder eine geschätzte Batteriekapazität zu bestimmen.

## Revendications

1. Machine autonome (100) comprenant :
un boîtier (102) couplé à un outil d'entretien (110) de la machine autonome (100),
une batterie (114) couplée au boîtier (102),
un dispositif de commande de propulsion (156) couplé de manière fonctionnelle à la batterie (114) et à au moins un moteur (104) de la machine autonome (100), et
un système de navigation (152) couplé de manière fonctionnelle à la batterie (114) et au dispositif de commande de propulsion (156), le système de navigation (152) étant conçu pour :
piloter le fonctionnement de la machine autonome (100) dans une zone de travail,
déterminer l'énergie restante de la batterie, et
déterminer un trajet entre une position actuelle de la machine autonome dans la zone de travail et une position de destination dans la zone de travail ;
**caractérisée en ce que** le système de navigation (152) est en outre conçu pour :
déterminer une estimation du seuil d'énergie de déplacement nécessaire pour que la machine autonome se déplace vers la position de destination, l'estimation du seuil d'énergie de déplacement étant fonction du trajet et d'une estimation d'énergie consommée par unité de distance,
générer un plan de terrain de la zone de travail,
ajuster l'estimation d'énergie consommée par unité de distance en fonction du plan de terrain, et
ajuster l'estimation du seuil d'énergie de déplacement en fonction de l'estimation ajustée d'énergie consommée par unité de distance.

2. Machine (100) selon la revendication 1, comprenant en outre un ensemble de roues (106, 108) configurées pour supporter le boîtier (102) sur la surface du sol, et le dispositif de commande de propulsion (156) est conçu pour commander la vitesse et le sens de rotation des roues (106, 108) indépendamment à l'aide du ou des moteurs (104), commandant ainsi à la fois la vitesse et la direction du boîtier (102) sur la surface du sol.

3. Machine selon la revendication 1 ou 2, dans laquelle le système de navigation (152) est en outre conçu pour actualiser de manière répétée l'énergie consommée par unité de distance en fonction d'au moins une charge de gazon changeante au fil du temps apprise par la machine autonome.

4. Procédé de navigation propre à une machine autonome comprenant :
le pilotage du fonctionnement d'une machine autonome (100) dans une zone de travail,
la détermination de l'énergie restante de la batterie, représentant une quantité d'énergie restante dans une batterie (114) de la machine autonome (100), et
la détermination d'un trajet entre une position actuelle de la machine autonome dans la zone de travail et une position de destination dans la zone de travail ;
**caractérisé par** :
la détermination d'une estimation du seuil d'énergie de déplacement nécessaire pour que la machine autonome se déplace vers la position de destination, l'estimation du seuil d'énergie de déplacement étant fonction du trajet et d'une estimation d'énergie consommée par unité de distance ;
la génération d'un plan de terrain de la zone de travail par le biais d'au moins un capteur de la machine autonome,
l'ajustement de l'estimation d'énergie consommée par unité de distance en fonction du plan de terrain, et
l'ajustement de l'estimation du seuil d'énergie de déplacement en fonction de l'estimation ajustée d'énergie consommée par unité de distance.

5. Procédé selon la revendication 4, comprenant en outre :
la comparaison de l'énergie restante de la batterie à l'estimation du seuil d'énergie de déplacement, et
le guidage de la machine autonome (100) suivant le trajet vers la position de destination en réaction au fait que l'énergie restante de la batterie chute en dessous de l'estimation du seuil d'énergie de déplacement.

6. Procédé selon la revendication 4 ou 5, dans lequel la détermination du trajet repose sur une distance de déplacement minimale en comparaison d'un ou plusieurs autres trajets possibles pour atteindre la position de destination.

7. Procédé selon l'une quelconque des revendications 4 à 6, dans lequel le trajet évite les obstacles présents dans la zone de travail.

8. Procédé selon l'une quelconque des revendications 4 à 7, comprenant en outre la génération d'un plan de distances de déplacement estimées représentant la distance relativement à chacune des positions présentes dans la zone de travail, et la détermination du trajet en fonction du plan de distances de déplacement estimées.

9. Procédé selon l'une quelconque des revendications 4 à 8, comprenant en outre la détermination d'une estimation d'énergie consommée par unité de distance en fonction de la pire consommation d'énergie possible par unité de distance.

10. Procédé selon l'une quelconque des revendications 4 à 9, comprenant en outre :
la détermination de l'énergie consommée par unité de distance en fonction d'une mesure d'énergie consommée par unité de distance à partir de la manière de fonctionner de la machine autonome dans la zone de travail, et
l'actualisation répétée de l'énergie consommée par unité de distance en fonction d'au moins une charge de gazon changeante apprise au fil du temps par la machine autonome.

11. Machine autonome selon la revendication 1, comprenant en outre un système de gestion de batterie (500) conçu pour déterminer l'énergie de batterie restante ; ledit plan de terrain contenant des informations comprenant au moins un des éléments suivants □: la pente du sol, l'élévation, les obstacles et les zones de blocage identifiées dans la zone de travail.

12. Machine selon la revendication 11, dans laquelle l'énergie de batterie restante est déterminée en fonction de la capacité de batterie et de la tension de batterie en circuit ouvert.

13. Machine selon la revendication 12, dans laquelle le système de gestion de batterie est conçu pour déterminer la capacité de batterie en fonction de l'intensité de batterie sur une durée particulière et de la dernière capacité de batterie.

14. Machine selon la revendication 12 ou 13, dans laquelle le système de gestion de batterie est conçu pour déterminer la capacité de batterie en réaction à une décharge complète de la batterie (114) ou à une estimation de capacité de batterie.
